# EUROPÄISCHE PATENTSCHRIFT

(11) **EP 2 126 395 B1**
(45) Veröffentlichungstag und Bekanntmachung des Hinweises auf die Patenterteilung: **05.11.2014**
(21) Anmeldenummer: 08715952.1
(22) Anmeldetag: 22.02.2008
(51) Int. Cl.: F16D 55/2265

(54) **SCHEIBENBREMSE FÜR EIN NUTZFAHRZEUG**
DISK BRAKE FOR A COMMERCIAL VEHICLE
FREIN À DISQUE POUR UN VÉHICULE UTILITAIRE

(30) Priorität: 22.02.2007 DE 102007008728
(43) Veröffentlichungstag der Anmeldung: 02.12.2009
(73) Patentinhaber: KNORR-BREMSE Systeme für Nutzfahrzeuge GmbH, 80809 München (DE)
(72) Erfinder: LINKE, Tobias, 82178 Puchheim (DE); STICH, Johann, 94560 Offenberg (DE)
(74) Vertreter: Mattusch, Gundula
(86) Internationale Anmeldenummer: PCT/EP2008/001401
(87) Internationale Veröffentlichungsnummer: WO 2008/101708

(56) Entgegenhaltungen:
- WO-A-03/067114
- WO-A-2007/123471
- DE-A1- 10 315 117
- US-A- 4 311 219

## Beschreibung

Die Erfindung betriff eine Scheibenbremse für ein Nutzfahrzeug entsprechend dem Oberbegriff des Anspruchs 1.

Bei solchen Scheibenbremsen wird der Bremssattel durch Befestigungselemente mit dem Bremsträger, der an das Fahrzeug angeschlossen ist, verbunden. Dabei sind Führungsholme, die Bestandteil der Befestigungselemente sind, am Bremsträger befestigt und bilden gemeinsam mit Gleitbuchsen Gleitlager, wobei die Führungsholme in den Gleitbuchsen so gerührt sind, dass eine axiale Verschiebung des Bremssattels am ortsfesten Bremsträger möglich ist.

Als Gleitbuchsen kommen beispielsweise solche aus selbstschmierenden Mehrschichtstoffen zum Einsatz, vorzugsweise Metall-Kunststoff-Verbund-Werkstoffe, die einen Metallrücken und eine PTFE-Auskleidung aufweisen.

Neben großen fertigungsbedingten Toleranzen treten im Bereich der Sattellagerung auch durch betriebsbedingte hohe mechanische Belastungen elastische Verformungen auf.

Die genannten Gleitbuchsen sind jedoch konstruktionsbedingt nicht in der Lage diese Verformungen aufzunehmen, so dass über die Betriebsdauer der Scheibenbremse das vorgegebene Mindestspiel sich vergrößert, was zu einem erhöhten Verschleiß sowie einer zunehmenden Geräuschentwicklung führt. Durch den Verschleiß geht die vorhandene thermische und mechanische Belastbarkeit der bekannten Gleitbuchse verloren bzw. wird so weit reduziert, dass die gewünschte Funktionsfähigkeit zumindest stark eingeschränkt ist.

Aus der EP 0 626 524 B1 sind zur Führung und Dämpfung der Führungsholme aus einem Elastomer bestehende Gleitbuchsen vorgesehen, die im Bremssattel verankert sind und in denen der jeweilige Führungsholm verschieblich geführt ist.

Eine ausschließlich aus einem Elastomer bestehende Gleitbuchse kann relativ große Toleranzen ausgleichen und system- bzw. betriebsbedingte Verformungen durch die hohe Elastizität aufnehmen. Die dämpfenden Eigenschaften des elastischen Materials führen überdies zu einer Minimierung der Geräuschentwicklung im Fahrbetrieb.

Allerdings ergibt sich durch auftretende Querkräfte zwischen dem Führungsholm und der Gleitbuchseninnenseite eine hohe Linienlast in der Gleitbuchse, die von dieser nicht optimal über die gesamte Betriebsdauer aufgenommen werden kann. Die partiell wirksamen Druckkräfte sind für den eingesetzten Werkstoff zu hoch und schädigen diesen nachhaltig. Die genannten Vorteile, die das Elastomer bietet, beispielsweise die Geräuschdämpfung, gehen dadurch verloren.

Eine gattungsgemäße Scheibenbremse ist aus der US 4,311,219 A bekannt. Die darin geoffenbarte Gleitbuchse des Loslagers weist eine Gummibuchse auf, die direkt in eine Bohrung des Bremssattels eingelassen ist. Dabei stützt sich die Gummibuchse axial verschiebbar an einer Metallhülse ab, die auf einem Führungsbolzen mit geringem Maß längs verschieblich geführt ist.

Der Erfindung liegt die Aufgabe zugrunde, eine Scheibenbremse der gattungsgemäßen Art so weiterzuentwickeln, dass mit geringem konstruktivem Aufwand die Gleitlager höher belastbar sind und die Standzeit der Scheibenbremse insgesamt verbessert wird.

Diese Aufgabe wird durch eine Scheibenbremse mit den Merkmalen des Anspruchs 1 gelöst.

Durch die Erfindung ist eine Gleitbuchse geschaffen, die einerseits hohe, betriebsbedingte mechanische Belastungen aufnehmen kann, andererseits eine dauerhaft optimierte Geräuschdämpfung sowie durch Belastungen beim Zuspannen der Bremse sich ergebende Maßschwankungen aufnimmt.

Während die mechanischen Belastungen von der Innenschale aufgenommen bzw. getragen werden, dient die zwischen der Innen- und einer Außenschale vorgesehene Schicht der Geräuschdämpfung sowie dem Ausgleich der erwähnten Maßschwankungen.

Die Außenschale, die vorzugsweise aus Metall besteht, wird im Sinne eines Presssitzes im Bremssattel gehalten. Die Innenschale ist vorzugsweise aus dem in der Beschreibungseinleitung genannten selbstschmierenden Mehrschichtwerkstoff, beispielsweise einem Metall-Polymer-Verbundwerkstoff auf PTFE-Basis, gebildet, wobei die Innenseite der Innenschale die Gleitseite darstellt, die gegenüber dem darin relativ axial verschiebbar gelagerten Führungsholm einen sehr niedrigen Reibungskoeffizienten aufweist.

Nach einer vorteilhaften Weiterbildung der Erfindung kann eine axiale Verschiebesicherung der Gleitbuchse insgesamt im Bremssattel durch die Ausbildung eines Bündchens an einer Stirnseite der Außenschale erreicht werden, das dann am Bremssattel anliegt.

Die Dimensionierung der Innenschale, vor allem deren Innendurchmesser kann ausschließlich auf die Anforderungen an die Gleitlagerung mit dem Führungsholm ausgerichtet sein, d.h. auf die in diesem Bereich entstehenden Belastungen. Dabei kann die Innenschale im Querschnitt rund oder oval ausgeführt werden, je nach Erfordernis.

Da durch die Erfindung die Belastung des elastischen Materials, vorzugsweise einem Elastomer, minimiert ist und ausschließlich durch den Toleranzausgleich bestimmt wird, werden die Anforderungen an das elastische Material reduziert, wodurch sich eine wesentliche Erhöhung der Standzeit ergibt. In diesem Sinne ergeben sich auch Vorteile durch die nicht mehr linear wirksamen Druckkräfte auf die elastische Schicht, wie sie im Stand der Technik bei einer Gleitbuchse ausschließlich aus einem Elastomer gegeben ist. Die sozusagen großflächige Verteilung der Druckkräfte führt zu einer geringeren Flächenpressung des elastischen Materials mit einer entsprechend geringeren Beanspruchung.

Prinzipiell kann die elastische Schicht durch Gießen eines geeigneten Materials in den durch die abständig zueinander angeordneten Innen- und Außenschale gebildeten Zwischenraum hergestellt werden. Denkbar ist aber auch, die Schicht zunächst als separates Teil auszubilden und in den Zwischenraum einzufügen und dort beispielsweise durch Verkleben mit der Innen- und Außenschale zu verbinden. Auch eine formschlüssige Verbindung ist denkbar oder eine Halterung, durch die eine axiale Relativbewegung sowohl der elastischen Schicht wie auch der Innen- und Außenschale zueinander verhindert wird.

Ein weiterer Gedanke der Erfindung sieht vor, dass ein Faltenbalg, der zur Abdichtung des Gleitlagers auf der der Bremsscheibe zugewandten Seite am Bremsträger befestigt ist, integraler Bestandteil der Gleitbuchse ist. Dabei kann der Faltenbalg aus dem gleichen elastischen Material bestehen, beispielsweise dem genannten Elastomer, wie die Schicht. Denkbar ist aber auch, diesen aus einem anderen Kunststoff auszubilden und zusammen mit der Schicht im Zweikomponenten-(2-K)-Spritzgussverfahren herzustellen.

Die elastische Schicht selbst kann ebenfalls aus einem Zwei- oder Mehrkomponenten-Material bestehen, insbesondere aus einem Zweikomponenten-Kunststoff.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer teilweise geschnittenen Draufsicht
- Figur 2: eine Einzelheit der Scheibenbremse in einem geschnittenen Längsschnitt.

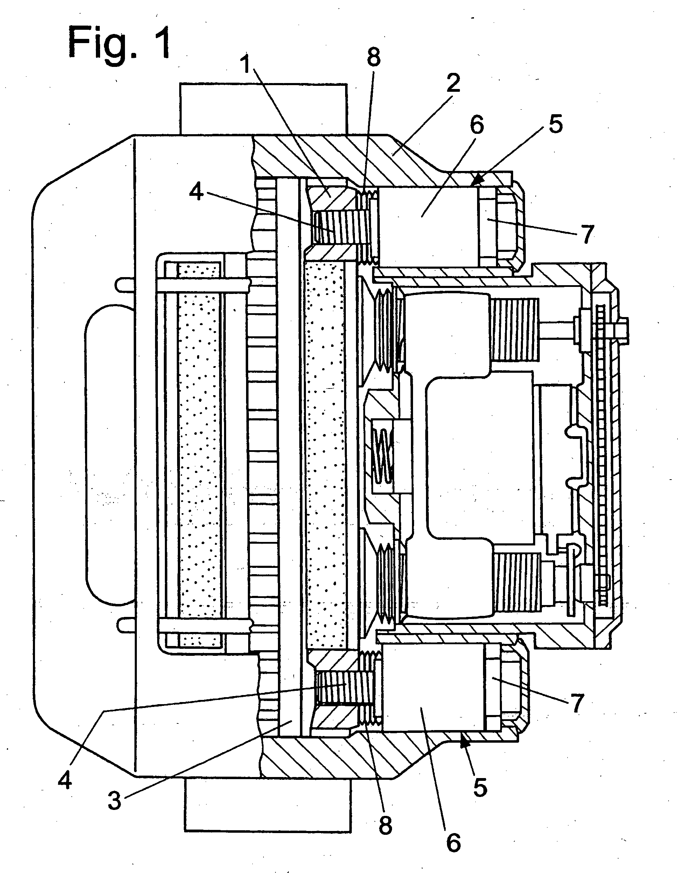

In der Figur 1 ist eine Scheibenbremse, insbesondere für ein Nutzfahrzeug dargestellt, die in ihrem Grundaufbau einen Bremssattel 2 aufweist, der eine Bremsscheibe 3 umfasst, die an einer nicht dargestellten Achse des Nutzfahrzeuges befestigt ist.

Der Bremssattel 2 ist an einem Bremsträger 1 des Nutzfahrzeuges, bezogen auf die Bremsscheibe 3, axial verschiebbar befestigt.

Hierzu sind zwei Befestigungselemente 4 vorgesehen, die mit dem Bremsträger 1 verbunden sind und jeweils einen Führungsholm 7 aufweisen, der Bestandteil eines Gleitlagers 5 ist, das überdies eine Gleitbuchse 6 aufweist. Die Gleitbuchse 6 ist im Bremssattel 2 festgelegt und zusammen mit dem Bremssattel 2 auf dem Führungsholm 7 axial verschiebbar.

Auf der der Bremsscheibe 3 zugewandten Seite sind die Gleitlager 6 gegenüber der Umgebung durch einen Faltenbalg 8 geschützt, wobei dieser an einer Stirnseite einer Gleitbuchse 6 des Gleitlagers 5 einerseits und andererseits am Bremsträger 1 befestigt ist.

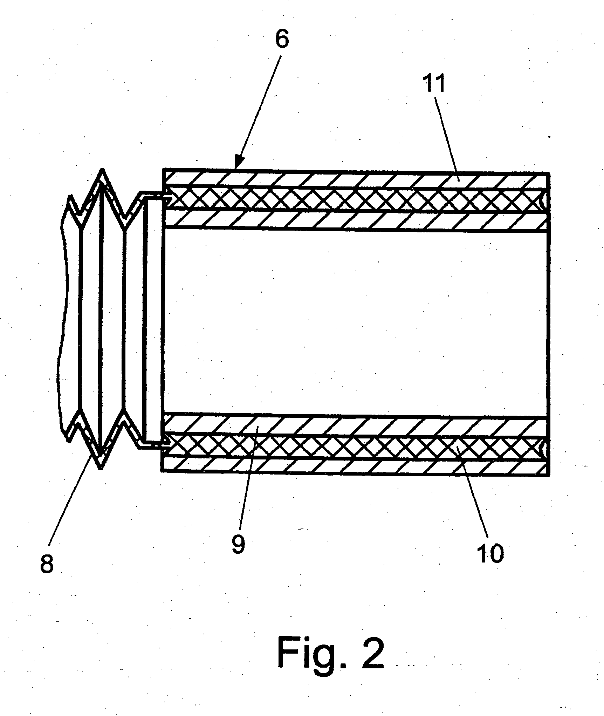

In der Figur 2 ist die Gleitbuchse 6 als Einzelheit dargestellt, die zumindest im Loslager zum Einsatz kommt.

Erfindungsgemäß weist die Gleitbuchse 6 eine Innenschale 9 sowie eine mantelseitig daran anliegende aus einem elastischen Material bestehende Schicht 10 auf, die von einer Außenschale 11 überdeckt ist.

Diese Außenschale 11 kann zur Halterung im Bremssattel 2 dort in eine entsprechende Aufnahmebohrung eingepresst sein, so dass die Gleitbuchse 6 sowohl axial wie auch verdrehgesichert gehalten ist. Denkbar ist aber auch, die Außenschale 11 so auszubilden, beispielsweise durch ein nicht dargestelltes, stirnseitiges Bündchen, dass sich in Korrespondenz mit einer entsprechenden Ausformung des Bremssattels 2 ein axialer und gegebenenfalls umfänglicher Formschluss ergibt.

Wie weiter zu erkennen ist, ist der Faltenbalg 8 integraler Bestandteil der Gleitbuchse 6. Dabei kann der Faltenbalg 8 aus dem gleichen elastischen Material, beispielsweise einem Elastomer, bestehen wie die Schicht 10. Eine andere Möglichkeit der Integration des Faltenbalges 8 besteht darin, die Schicht 10 und den Faltenbalg 8 im Zweikomponenten-Spritzgussverfahren herzustellen, so dass der Faltenbalg 8 unlösbar mit der Schicht 10 verbunden ist.

Im übrigen besteht die Innenschale 9 vorzugsweise aus einem Metall-Polymer-Verbundwerkstoff auf PTFE-Basis, mit selbstschmierenden Eigenschaften, so dass eine reibungsminimierte Verschiebung des Bremssattels 2 auf den Führungsholmen 7 gewährleistet ist. Die Außenschale 11 hingegen kann aus einem geeigneten Metall gebildet sein.

### Bezugszeichenliste

- 1: Bremsträger
- 2: Bremssattel
- 3: Bremsscheibe
- 4: Befestigungselement
- 5: Gleitlager
- 6: Gleitbuchse
- 7: Führungsholm
- 8: Faltenbalg
- 9: Innenschale
- 10: elastische Schicht
- 11: Außenschale

## Patentansprüche

1. Scheibenbremse, insbesondere für ein Nutzfahrzeug, mit
a. einem eine Bremsscheibe (3) umfassenden Bremssattel (2), der mittels zweier, in Gleitlagern (5) geführter Befestigungselemente (4), bezogen auf die Bremsscheibe (3) axial verschiebbar an einem ortsfesten Bremsträger (1) befestigt ist,
b. wobei ein Gleitlager (5) als Fest- und das andere als Loslager ausgebildet ist,
c. die jeweils eine im Bremssattel (2) gehaltene Gleitbuchse (6) aufweisen,
d. wobei auf der der Bremsscheibe (3) zugewandten Seite die Gleitlager (5) gegenüber der Umgebung jeweils durch einen Faltenbalg (8) geschützt sind und wobei der Faltenbalg (8) jeweils an einer Stirnseite einer Gleitbuchse des Gleitlagers (5) einerseits und andererseits am Bremsträger befestigt ist,
e. wobei zumindest die dem Loslager zugeordnete Gleitbuchse (6) eine Innenschale (9) aufweist, an der mantelseitig eine aus einem elastischen Material bestehende Schicht (10) anliegt,
**dadurch gekennzeichnet, dass**
f. die Gleitbuchse (6) verschiebegesichert im Bremssattel (2) gehalten ist und von einer Außenschale (11) überdeckt ist.

2. Scheibenbremse nach Anspruch 1, **dadurch gekennzeichnet, dass** die Schicht (10) aus einem Elastomer besteht.

3. Scheibenbremse nach Anspruch 1 oder 2, **dadurch gekennzeichnet, dass** die Außenschale (11) fest mit der Schicht (10) verbunden ist.

4. Scheibenbremse nach einem der vorhergehenden Ansprüche, **dadurch gekennzeichnet, dass** die Innenschale (9) aus einem selbstschmierenden Werkstoff, insbesondere einem Mehrschichtwerkstoff gebildet ist.

5. Scheibenbremse nach einem der vorhergehenden Ansprüche, **dadurch gekennzeichnet, dass** die Außenschale (11) axial und verdrehgesichert im Bremssattel (2) gehalten ist.

6. Scheibenbremse nach einem der vorhergehenden Ansprüche, **dadurch gekennzeichnet, dass** die Außenschale (11) in den Bremssattel (2) eingepresst ist.

7. Scheibenbremse nach einem der vorhergehenden Ansprüche, **dadurch gekennzeichnet, dass** die Außenschale (11) stirnseitig ein Bündchen aufweist, das formschlüssig im Bremssattel (2) gehalten ist.

8. Scheibenbremse nach einem der vorhergehenden Ansprüche, **dadurch gekennzeichnet, dass** der Faltenbalg (8) integraler Bestandteil der Gleitbuchse (6) ist.

9. Scheibenbremse nach einem der vorhergehenden Ansprüche, **dadurch gekennzeichnet, dass** der Faltenbalg (8) einstückig mit der Schicht (10) ausgebildet ist.

10. Scheibenbremse nach einem der vorhergehenden Ansprüche, **dadurch gekennzeichnet, dass** der Faltenbalg (8) aus dem gleichen Material wie die Schicht (10) besteht.

11. Scheibenbremse nach einem der vorhergehenden Ansprüche, **dadurch gekennzeichnet, dass** die Schicht (10) und der Faltenbalg (8) im Zweikömponenten-Spritzgussverfahren hergestellt sind.

12. Scheibenbremse nach einem der vorhergehenden Ansprüche, **dadurch gekennzeichnet, dass** die Schicht (10) und die Innenschale (9) fest miteinander verbunden sind.

13. Scheibenbremse nach einem der vorhergehenden Ansprüche, **dadurch gekennzeichnet, dass** die Schicht (10) aus einem Mehrkomponenten-Material besteht.

14. Scheibenbremse nach einem der vorhergehenden Ansprüche, **dadurch gekennzeichnet, dass** der lichte Querschnitt der Innenschale (9) rund oder oval ausgebildet ist.

## Claims

1. Disc brake, in particular for a commercial vehicle, having:
a. a brake calliper (2), comprising a brake disc (3), which is fastened in an axially movable manner in relation to the brake disc (3) on a positionally fixed brake carrier (1) by means of two fastening elements (4) guided in plain bearings (5),
b. wherein one plain bearing (5) is designed as a fixed bearing and the other as a floating bearing,
c. which respectively have a sliding bush (6) held in the brake calliper (2),
d. wherein the plain bearings (5) are protected, on the side facing the brake disc (3), with respect to the environment by a respective bellows (8), and wherein the bellows (8) is fastened at an end face of a sliding bush of the plain bearing (5) on the one hand and at the brake carrier on the other hand,
e. wherein at least the sliding bush (6) assigned to the floating bearing has an inner shell (9), against which a layer (10) made of an elastic material lies on the jacket side, **characterised in that**
f. the sliding bush (6) is held in the brake calliper (2) in a manner secured against movement and is covered by an outer shell (11).

2. Disc brake according to claim 1, **characterised in that** the layer (10) is made of an elastomer.

3. Disc brake according to claim 1 or 2, **characterised in that** the outer shell (11) is fixedly connected to the layer (10).

4. Disc brake according to one of the preceding claims, **characterised in that** the inner shell (9) is formed from a self-lubricating material, in particular a multi-layer material.

5. Disc brake according to one of the preceding claims, **characterised in that** the outer shell (11) is held axially and rotationally-secured in the brake calliper (2).

6. Disc brake according to one of the preceding claims, **characterised in that** the outer shell (11) is pressed into the brake calliper (2).

7. Disc brake according to one of the preceding claims, **characterised in that** the outer shell (11) has a cuff at its end face which is held in a positive-locking manner in the brake calliper (2).

8. Disc brake according to one of the preceding claims, **characterised in that** the bellows (8) is an integral part of the sliding bush (6).

9. Disc brake according to one of the preceding claims, **characterised in that** the bellows (8) is integrally formed with the layer (10).

10. Disc brake according to one of the preceding claims, **characterised in that** the bellows (8) is made of the same material as the layer (10).

11. Disc brake according to one of the preceding claims, **characterised in that** the layer (10) and the bellows (8) are produced in the two-component injection moulding process.

12. Disc brake according to one of the preceding claims, **characterised in that** the layer (10) and the inner shell (9) are fixedly connected to each other.

13. Disc brake according to one of the preceding claims, **characterised in that** the layer (10) is made of a multi-component material.

14. Disc brake according to one of the preceding claims, **characterised in that** the clear cross-section of the inner shell (9) is round or oval.

## Revendications

1. Frein à disque, en particulier pour un véhicule utilitaire, comprenant
a. un étrier de frein (2) enserrant un disque de frein (3), qui est fixé moyennant deux éléments de fixation (4) guidés dans des paliers lisses (5), à un support de frein stationnaire pour un déplacement axial relatif audit disque de frein (3),
b. dans lequel un palier lisse (5) est conçu sous forme d'un palier fixe pendant que l'autre est conçu en tant que palier libre,
c. dont chacun comprend un manchon coulissant (6) retenu dans ledit étrier de frein (2),
d. dans lequel, du côté en face dudit disque de frein (3), lesdits paliers lisses (5) sont protégés contre l'environnement par un soufflet respectif (8), audit soufflet (8) étant fixé, d'un côté, à une face d'un manchon coulissant dudit palier lisse (5), et, d'autre côté, audit support de frein,
e. dans lequel au moins ledit manchon coulissant (6) affecté audit palier libre comprend une coque intérieure (9), contre laquelle repose, du côté de l'enveloppe, une couche (10) faite en un matériau élastique,
**caractérisé en ce que**
f. ledit manchon coulissant (6) est retenu dans ledit étrier de frein (2) en étant protégé contre le déplacement et recouvert par une coque extérieure (11).

2. Frein à disque selon la revendication 1, **caractérisé en ce que** ladite couche (10) consiste en un élastomère.

3. Frein à disque selon la revendication 1 ou 2, **caractérisé en ce que** ladite coque extérieure (11) est fixée à ladite couche (10).

4. Frein à disque selon une quelconque des revendications précédentes, **caractérisé en ce que** ladite coque intérieure (9) est formée par un matériau autolubrifiant, en particulier un matériau multicouches.

5. Frein à disque selon une quelconque des revendications précédentes, **caractérisé en ce que** ladite coque extérieure (11) est retenu axialement dans ledit étrier de frein, en étant protégée contre toute torsion.

6. Frein à disque selon une quelconque des revendications précédentes, **caractérisé en ce que** ladite coque extérieure (11) est pressée dans ledit étrier de frein (2).

7. Frein à disque selon une quelconque des revendications précédentes, **caractérisé en ce que** ladite coque extérieure est pourvue d'un petit collet du côté de face, qui est tenu à auto-emboîtement dans ledit étrier de frein (2).

8. Frein à disque selon une quelconque des revendications précédentes, **caractérisé en ce que** ledit soufflet (8) est un composant intégral dudit manchon glissant (6).

9. Frein à disque selon une quelconque des revendications précédentes, **caractérisé en ce que** ledit soufflet (8) est conçu en tant que partie intégrale de ladite couche (10).

10. Frein à disque selon une quelconque des revendications précédentes, **caractérisé en ce que** ledit soufflet (8) est composé du même matériau que le matériau de ladite couche (10).

11. Frein à disque selon une quelconque des revendications précédentes, **caractérisé en ce que** ladite couche (10) et ledit soufflet (8) sont fabriqués selon un procédé de moulage par injection à deux composant.

12. Frein à disque selon une quelconque des revendications précédentes, **caractérisé en ce que** ladite couche (10) et ladite coque intérieure (9) sont solidement raccordées l'une à l'autre.

13. Frein à disque selon une quelconque des revendications précédentes, **caractérisé en ce que** ladite couche (10) consiste en un matériau multi-composants.

14. Frein à disque selon une quelconque des revendications précédentes, **caractérisé en ce que** la section intérieure de ladite coque intérieure (9) a une forme ronde ou ovale.
